# NEUE EUROPÄISCHE PATENTSCHRIFT

(11) **EP 2 751 439 B2**
(45) Veröffentlichungstag und Bekanntmachung des Hinweises auf die Entscheidung über den Einspruch: **07.05.2025**
(45) Hinweis auf die Patenterteilung: 06.04.2016
(21) Anmeldenummer: 12799210.5
(22) Anmeldetag: 13.12.2012
(51) Int. Cl.: F16D 51/18

(54) **BREMSSYSTEM EINER TROMMELBREMSE**
BRAKE SYSTEM OF A DRUM BRAKE
SYSTÈME DE FREINAGE D'UN FREIN À TAMBOUR

(30) Priorität: 16.12.2011 DE 102011088847
(43) Veröffentlichungstag der Anmeldung: 09.07.2014
(73) Patentinhaber: SAF-HOLLAND GmbH, 63856 Bessenbach (DE)
(72) Erfinder: DREWES, Olaf, 63743 Aschaffenburg (DE); BIEWER, Frederik, 63808 Haibach (DE)
(74) Vertreter: Müller Schupfner & Partner Patent- und Rechtsanwaltspartnerschaft mbB (Muc)
(86) Internationale Anmeldenummer: PCT/EP2012/075332
(87) Internationale Veröffentlichungsnummer: WO 2013/087746

(56) Entgegenhaltungen:
- FR-A- 1 294 262
- GB-A- 1 024 449
- GB-A- 1 237 302
- GB-A- 1 418 630

## Beschreibung

Die vorliegende Erfindung betrifft ein Bremssystem einer Trommelbremse umfassend eine Trägereinheit und einen Bremszylinder, insbesondere für den Einsatz in Nutzfahrzeugen.

Bremssysteme von Spreizkeiltrommelbremsen sind aus dem Stand der Technik bekannt, wobei das Rad eines Nutzfahrzeuges über eine gemeinsam mit dem Rad rotierende Bremstrommel und an der Bremstrommel eingreifende Bremsbackenelemente verzögert wird. Um die nicht rotierenden Komponenten des Bremssystems an dem Rahmen des Nutzfahrzeuges festzulegen, wird in bekannter Weise eine Trägereinheit bzw. ein Bremsträger verwendet, welcher beispielsweise Komponenten wie Bremsbackenelemente oder Bremszylinder gegen Verlagerung relativ zum Fahrzeugrahmen des Nutzfahrzeuges sichert bzw. abstützt. Es konnten bisher nur speziell für Spreizkeiltrommelbremsen ausgelegte Bremszylinder über ein längliches rohrförmiges Element an der Trägereinheit festgelegt werden, wobei insbesondere durch das hohe Gewicht und den langen Hebelarm beachtliche Momente die Anbindungsstelle des Bremszylinders an der Trägereinheit belasten und ermüden lassen. Weiterhin sind die Bremszylinder für Spreizkeiltrommelbremsen im Vergleich zu Bremszylindern für Scheibenbremssysteme wesentlich teurer, da sie nicht in Massenproduktion hergestellt werden.

Die Dokumente FR 1 294 262A, GB 1 418 630 A, US 4 621 713 A und US 3 322 241 A offenbaren Bremssysteme nach dem Oberbegriff des Anspruchs 1.

Aufgabe der vorliegenden Erfindung ist es, die Anbindungsstelle des Bremszylinders an die Trägereinheit zu optimieren und gleichzeitig zu ermöglichen, dass als Bremszylinder auch ein Standardbremszylinder, wie er beispielsweise im Scheibenbremssystemen zum Einsatz kommt, verwendet werden kann.

Diese Aufgabe wird gelöst mit einem Bremssystem gemäß dem unabhängigen Anspruch 1. Weitere Vorteile und Merkmale der Erfindung ergeben sich aus den abhängigen Ansprüchen.

Erfindungsgemäß umfasst das Bremssystem, welches insbesondere als Bremssystem einer Spreizkeiltrommelbremse bzw. als Spreizkeiltrommelbremssystem ausgebildet ist, eine Trägereinheit und einen Bremszylinder, wobei ein Anschlusselement vorgesehen ist, das einen ersten Anschlussabschnitt zur Festlegung des Bremszylinders aufweist und in einem zweiten Anschlussabschnitt an der Trägereinheit festgelegt ist, wobei der erste Anschlussabschnitt parallel zu einer Radachse versetzt zum zweiten Anschlussabschnitt angeordnet ist und wobei der erste Anschlussabschnitt unmittelbar am Bremszylinder festlegbar ist, um den Abstand zwischen dem Schwerpunkt des Bremszylinders und dem ersten Anschlussabschnitt gering zu halten. Der Bremszylinder ist dabei bevorzugt ein pneumatisch betriebener Bremszylinder, welcher eine Druckkraft eines Druckluftsystems in eine Transversalbewegung bzw. eine Längskraft umwandelt und an ein Kraftübertragungselement überträgt. Der Bremszylinder ist bevorzugt im Wesentlichen rotationssymmetrisch um eine Übertragungsachse ausgebildet, wobei sein Schwerpunkt insbesondere bevorzugt ebenfalls auf der Übertragungsachse angeordnet ist. Die Lage des Schwerpunkts des Bremszylinders ist vor allem bestimmt durch die im Bremszylinder verbauten Komponenten und die daraus resultierende Gewichtsverteilung innerhalb des Bremszylinders. Der Bremszylinder ist nicht direkt an der Trägereinheit festgelegt, sondern wird über das Anschlusselement relativ zu den starren, d.h. nicht rotierenden Komponenten des Fahrwerkssystems des Nutzfahrzeuges festgelegt. Insbesondere, wenn die Trägereinheit bevorzugt von einer rotierenden Bremstrommel umgeben ist, ist es vorteilhaft, den Bremszylinder derart anzuordnen, dass er nicht mit der rotierenden Bremstrommel kollidiert. Zu diesem Zweck weist das Anschlusselement eine Erstreckung längs der Übertragungsachse auf und ist in einem zweiten Anschlussabschnitt an der Trägereinheit festgelegt, wobei an einem ersten Anschlussabschnitt des Anschlusselements der Bremszylinder festlegbar ist. Der zweite Anschlussabschnitt ist dabei bevorzugt in dem Bereich des Anschlusselements vorgesehen, in welchem die Übertragungsachse die Trägereinheit, bzw. eine quer zur Radachse liegende Haupterstreckungsebene der Trägereinheit schneidet. Alternativ bevorzugt kann der zweite Anschlussabschnitt als der Bereich des Anschlusselements definiert sein, in welchem - entlang der Übertragungsachse - eine wesentliche Querschnittsänderung (quer zur Übertragungsachse) in Relation zu einem mittleren Bereich des Anschlusselements vorgesehen ist, d. h. in welchem das Anschlusselement bevorzugt in die Trägereinheit übergeht. Diese beiden Anordnungen sind besonders vorteilhaft bei einer Ausgestaltung der Bremse als Spreizkeiltrommelbremse. Für die Festlegung des Anschlusselements an der Trägereinheit ist eine stoffschlüssige Verbindung bevorzugt. Um eine leichte Montage und Demontage des Bremszylinders am ersten Anschlussabschnitt des Anschlusselements zu ermöglichen, ist eine bevorzugt lösbare, form- bzw. kraftschlüssige Verbindung zwischen dem Bremszylinder und dem Anschlusselement vorgesehen. Während der Fahrt des Nutzfahrzeuges können starke Schwingungen bzw. Stöße vom Bremszylinder auf das Anschlusselement und die Trägereinheit und umgekehrt wirken. Um die dabei entstehenden Momente im ersten Anschlussabschnitt möglichst gering zu halten, ist es bevorzugt, dass die tragende Verbindung zwischen Anschlussabschnitt und dem Bremszylinder möglichst nah am Schwerpunkt des Bremszylinders angeordnet ist, wobei auf diese Weise der Hebelarm, der vom Schwerpunkt des Bremszylinders bis zum ersten Anschlussabschnitt wirkt, möglichst kurz bleibt. Dies ist besonders vorteilhaft bei einer Ausgestaltung der Bremse als Spreizkeiltrommelbremse. Bevorzugt können dabei jedoch weitere Elemente, wie beispielsweise Dicht- oder Dämpferelemente, die keine tragende Funktion zwischen Bremszylinder und dem Anschlusselement übernehmen, zwischen dem Anschlusselement und dem Bremszylinder angeordnet sein. Das Anschlusselement ist mittels einer bevorzugt stoffschlüssigen Verbindung mit der Trägereinheit verbunden, wobei eine stoffschlüssige Verbindung im Allgemeinen als fester und weniger anfällig für Verschleiß betrachtet werden kann als eine beispielsweise kraft- bzw. formschlüssige Verbindung mittels eines Schraubenelements.

Insbesondere bevorzugt ist das Anschlusselement einstückig mit der Trägereinheit ausgebildet. Diese einstückige Ausführung von Anschlusselement und Trägereinheit kann bereits während der Herstellung der beiden Bauteile erreicht werden, indem sie als ein Gussteil oder ein Schmiedeteil ausgeführt sind. Alternativ bevorzugt kann es auch sein, das Anschlusselement mittels einer Schweißverbindung an der Trägereinheit festzulegen. Da die Anschlussstelle zwischen Anschlusselement und Trägereinheit hohe Kräfte und Momente aufnehmen und von dem Anschlusselement an die Trägereinheit übertragen muss, ist es bevorzugt, den zweiten Anschlussabschnitt bzw. die Trägereinheit im Bereich des zweiten Anschlussabschnitts, beispielsweise mittels geeigneter Rundungen oder Materialanhäufungen, insbesondere für günstigen Momenten- und Kraftfluss bzw. eine optimale Spannungsverteilung auszulegen.

Erfindungsgemäß steht der Abstand d1 des Schwerpunkts des Bremszylinders zum ersten Anschlussabschnitt in einem Verhältnis von 0,3 bis 0,7 zum Abstand d2 des Schwerpunkts des Bremszylinders vom zweiten Anschlussabschnitt.
Bevorzugt ist der Abstand des ersten Anschlussabschnitts zum zweiten Anschlussabschnitt, die Länge bzw. die Erstreckung des Anschlusselements längs der Übertragungsachse. Dabei wirkt das Gewicht bzw. die Trägheitskraft des Bremszylinders ausgehend von seinem Schwerpunkt mit einem Hebelarm, der sich aus der Summe des Abstands des Schwerpunkts des Bremszylinders zum ersten Anschlussabschnitt und der Länge des Anschlusselements ergibt. Um den Gesamthebelarm möglichst gering zu halten, ist es bevorzugt, dass der Schwerpunkt des Bremszylinders möglichst nah am ersten Anschlussabschnitt angeordnet ist, wobei insbesondere die in dem ersten Anschlussabschnitt, bzw. die zwischen dem ersten Anschlussabschnitt und Bremszylinder wirkenden Momente aufgrund des kurzen Hebelarmes gering gehalten werden können. Je weiter der Schwerpunkt des Bremszylinders vom ersten Anschlussabschnitt entfernt angeordnet ist, desto größer sind die im ersten Anschlussabschnitt wirkenden Momente, bzw. Biegemomente zwischen dem Bremszylinder und dem Anschlusselement. Die Untergrenze dieses Verhältnisses von bevorzugt 0,05 ist dabei gekennzeichnet durch einen besonders kurzen bzw. einen sich besonders gering entlang der Übertragungsachse erstreckenden Bremszylinder im Verhältnis zu einem sehr langen Übertragungselement. Bevorzugt kann aber auch die Verwendung eines großen Zylinders, mit einem großen Hubweg sein, wobei in diesem Fall das Verhältnis von d₁ zu d₂ groß ist. Der bevorzugte Bereich des Verhältnisses des Abstands d₁ zum Abstand d₂ ermöglicht dabei den richtigen Kompromiss zwischen dem optimalen Biegemomentverhältnis an den Anschlussabschnitten und der optimalen Einbauposition des Bremszylinders im Bereich der Radaufhängung zu erreichen. Bevorzugt wirkt auf den zweiten Anschlussabschnitt ein Vielfaches des Biegemoments, das auf den ersten Anschlussabschnitt wirkt. Die Einbauposition des Bremszylinders gewährleistet bevorzugt eine gute Erreichbarkeit für Montagearbeiten am Bremszylinder, sichert den nötigen Abstand der an dem Bremszylinder angeschlossenen Hydraulikleitungen von rotierenden Bauteilen und stellt sicher, dass bei Schwingungen des Bremssystems Resonanzen mit nur sehr geringer Wahrscheinlichkeit auftreten.

Erfindungsgemäß ist das Anschlusselement zumindest bereichsweise
hohlkörperförmig ausgebildet, um ein Übertragungselement aufzunehmen, wobei die Aussparung des Anschlusselements sich im Wesentlichen längs einer Übertragungsachse erstreckt. Das Anschlusselement erfüllt bevorzugt zumindest zwei Hauptaufgaben. Zum einen nimmt es ein Übertragungselement auf und schützt den Bereich, in welchem sich das Übertragungselement verlagert, gegen das Eindringen bzw. Einwirken von Fremdkörpern. Zum anderen stützt das Anschlusselement den Bremszylinder gegen die Trägereinheit ab bzw. gegen eine bevorzugt an der Trägereinheit festgelegte Wandlereinheit. Auf diese Weise ist es möglich, eine Kraft bzw. Stellkraft, welche vom Bremszylinder aufgebracht wird, über das Übertragungselement an die Wandlereinheit, bzw. Spreizkeileinheit zu übertragen. Mit anderen Worten dient das Anschlusselement bevorzugt dazu, den Bremszylinder in einem bestimmten Abstand zur Trägereinheit, bzw. zur Wandlereinheit zu halten bzw. festzulegen.

Erfindungsgemäß ist die Übertragungsachse zur Radachse um einen Winkel **α** geneigt, wobei der Winkel **α** Werte im Bereich von ca. 7° bis 15° annimmt. Die Radachse ist dabei bevorzugt die Haupterstreckungsachse der starren Achse eines
Nutzfahrzeuges und insbesondere bevorzugt die Achse, um welche ein Achsstummel bzw. der Lagerbereich eines Achsstummels rotationssymmetrisch ausgebildet ist. Insbesondere bevorzugt entspricht die Radachse auch der Rotationsachse, um welche das Rad des Nutzfahrzeuges rotiert, wobei gemeinsam mit dem Rad eine Bremstrommel um die Radachse rotiert. Die Übertragungsachse ist bevorzugt die Achse, in welcher der Bremszylinder seine Kraft an die Wandlereinheit überträgt, also mit anderen Worten bevorzugt die Achse, entlang derer sich das Übertragungselement verlagert. Um die Montage zu erleichtern und die Funktionsweise des Bremszylinders nicht durch weitere Anbauteile des Fahrwerkssystems, wie die starre Achse und die rotierende Bremstrommel, zu behindern, ist es bevorzugt, die Übertragungsachse relativ zur Radachse zu neigen. Dabei hat es sich als vorteilhaft erwiesen, den Winkel der Neigung von Übertragungsachse zur Radachse in einem Bereich von 1° bis 45° zu wählen. Besonders vorteilhaft und platzsparend ist dabei ein Winkel von 7° bis 15°, wobei die Gefahr, dass der Bremszylinder mit den rotierenden Teilen des Fahrwerks kollidiert, gering ist.

Ferner bevorzugt ist zumindest ein Dichtelement vorgesehen, um den Verbindungsbereich zwischen Bremszylinder und Anschlusselement und/oder die Aussparung des Anschlusselements und/oder den Bremszylinder gegen das Eindringen von Fremdkörpern zu schützen. In einer ersten bevorzugten Ausführungsform kann dieses Dichtelement beispielsweise als elastischer, aus Gummi hergestellter O-Ring ausgebildet sein, welcher zwischen den Kontaktflächen des Bremszylinders und des ersten Anschlussabschnitts angeordnet ist. Auf diese Weise kann verhindert werden, dass Fremdkörper über die Kontaktstelle zwischen Bremszylinder und Anschlusselement in den Hohlraum des Anschlusselements bzw. in den Bremszylinder gelangen. Alternativ oder zusätzlich bevorzugt kann das Dichtungselement als Faltenbalg ausgeführt sein, der das Übertragungselement zumindest bereichsweise umgibt und sich an der Wandlereinheit oder dem Übertragungselement und am Bremszylinder abstützt und verhindert, dass Fremdkörper an das Übertragungselement bzw. in den Bremszylinder gelangen.

Insbesondere bevorzugt ist zwischen dem ersten Anschlussabschnitt und dem Bremszylinder ein Dämpferelement vorgesehen, um die Übertragung von Stößen und Schwingungen vom Anschlusselement auf den Bremszylinder und entgegengesetzt zu vermindern. Das Dämpferelement kann dabei bevorzugt ein aus Gummi oder einem elastischen Werkstoff hergestelltes scheibenförmiges Element sein, welches zwischen die Kontaktflächen des Anschlussabschnitts und des Bremszylinders eingesetzt ist und zwischen beiden Bauteilen eingeklemmt ist. Weiterhin bevorzugt kann das Dämpferelement als aus elastischem Metall ausgebildete Scheibe oder Block geformt sein. Bevorzugt dient das Dämpferelement der schwingungsmechanischen Entkopplung des Bremszylinders von dem Anschlusselement bzw. von der Trägereinheit. Alternativ kann ein Dämpferelement aus einem plastisch verformbaren Material vorgesehen sein, welches insbesondere dazu geeignet ist, schwere Stöße vom Bremszylinder oder auf den Bremszylinder aufzunehmen, um elementare Komponenten des Bremszylinders und des Anschlusselements gegen Beschädigung zu schützen. Bei dieser bevorzugten Ausführungsform ist das Dämpferelement als Verschleißteil ausgelegt, welches lediglich bei Auftreten einer Beschädigung oder nach Verschleiß gewechselt werden muss. Bevorzugt kommt für ein plastisch verformbares Dämpferelement ein duktiles Metall zum Einsatz.

Ferner bevorzugt ist der erste Anschlussabschnitt als Flansch ausgebildet und weist Aussparungen auf, in welchen Befestigungsmittel in Eingriff bringbar sind, um den Bremszylinder am Anschlusselement festzulegen. Der Anschlussabschnitt bzw. der erste Anschlussabschnitt des Anschlusselements kann bevorzugt kragenförmig ausgebildet sein, wobei in den sich im Wesentlichen quer zur Übertragungsachse erstreckenden kragenförmigen Abschnitt des Anschlussabschnitts Befestigungsmittel eingreifen oder hindurch greifen können, um den Bremszylinder am Anschlusselement festzulegen. Bevorzugte Befestigungsmittel können beispielsweise Bolzen oder Schraubenelemente mit Außengewinde sein, welche in dafür vorgesehene Innengewinde am Anschlussabschnitt, am Bremszylinder oder in zusätzlich angebrachten Muttern eingreifen. Insbesondere, wenn ein Dämpferelement zwischen dem ersten Anschlussabschnitt und dem Bremszylinder vorgesehen ist, weisen die Befestigungsmittel bevorzugt ebenfalls eine gewisse Elastizität auf, damit es während eines Schwingungsvorganges zwischen Bremszylinder und Anschlussabschnitt nicht zum Aufdrehen bzw. Aufschrauben der Befestigungsmittel kommt. Alternativ bevorzugt können die Befestigungsmittel auch mithilfe von Splinten gegen Lösen bzw. Aufdrehen gesichert werden. Insbesondere bevorzugt können die Befestigungsmittel einstückig mit dem Bremszylinder ausgeführt sein und durch Aussparungen am Anschlussabschnitt hindurch reichen, um auf der dem Bremszylinder gegenüberliegenden Seite des ersten Anschlussabschnitts in Muttern einzugreifen.

Erfindungsgemäß weist der zweite Anschlussabschnitt eine antiklastisch gekrümmte Außenkontur auf. Die antiklastische Krümmung vermindert in bevorzugter Weise das Auftreten von Kerbwirkung bei Belastung des zweiten Anschlussabschnitts auf Biegung oder Zug. Als antiklastisch gekrümmt ist eine Fläche definiert, welche eine Krümmung um eine erste Hauptachse, im vorliegenden Fall bevorzugt die Übertragungsachse, aufweist und eine zu dieser ersten Krümmung quer verlaufende zweite, im Querschnitt konkave Krümmung aufweist. Mit anderen Worten weist der zweite Anschlussabschnitt im Bereich zwischen der Trägereinheit und dem Anschlusselement eine hyperboloide Form bzw. eine sattelähnliche Flächengeometrie auf. Weiterhin ist die antiklastische Krümmung dadurch gekennzeichnet, dass der Übergang der Außenflächen des zweiten Anschlussabschnitts zur Trägereinheit bzw. zum Anschlusselement jeweils im Wesentlichen tangential zu deren Flächen verläuft. Ein derart gestalteter zweiter Anschlussbereich ermöglicht einen besonders gleichmäßigen Spannungsverlauf bzw. eine gleichmäßige Spannungsverteilung im Material sowohl der Trägereinheit als auch des Anschlusselements. Bevorzugt steigen somit die Lebensdauer bzw. die maximal möglichen Biegemomente.

In einer weiterhin bevorzugten Ausführungsform weist das Anschlusselement eine entlang der Übertragungsachse in Richtung des zweiten Anschlussabschnitts zunehmende Querschnittsdicke und/oder Wandstärke auf, um eine gleichmäßige Biegespannungsverteilung im Anschlusselement zu erreichen. Bei einer beispielsweise durch das Gewicht oder durch am Bremszylinder anliegende Schwingungen auftretenden und auf das Anschlusselement einwirkenden Kraft steigt die im Anschlusselement auftretende Biegespannung mit zunehmendem Hebelarm. Um zu verhindern, dass die Biegespannung im Bereich des zweiten Anschlussabschnitts einen Wert erreicht, der größer ist als die maximal mögliche Festigkeit bzw. Biegefestigkeit des Herstellungsmaterials des Anschlusselements wird bevorzugt das Flächenträgheitsmoment, welches sowohl durch die geometrischen Abmessungen als auch durch die Wandstärke des Anschlusselements definiert ist, vergrößert. Bevorzugt ist es also, dass die Erstreckung des Anschlusselements quer zur Übertragungsachse vergrößert wird und/oder die Wandstärke des Anschlusselements im Verlauf vom ersten Anschlussabschnitt zum zweiten Anschlussabschnitt zunimmt. Da auf diese Weise die Querschnittsdicke bzw. die Wandstärke des Anschlusselements optimal an die auftretenden Biegespannungen bzw. aufzunehmenden Kräfte angepasst ist, kann insbesondere bevorzugt Gewicht eingespart werden, da keine Überdimensionierung des Anschlusselements stattfindet.

In einer weiteren bevorzugten Ausführungsform weist der erste Anschlussabschnitt eine Hinterschneidung auf, mit welcher eine korrespondierende Geometrie des Bremszylinders in formschlüssigen Eingriff bringbar ist. Bevorzugt kann beispielsweise ein Bajonettverschluss vorgesehen sein, bei welchem der Bremszylinder längs der Übertragungsachse gegen den Anschlussabschnitt geführt wird und durch leichte Drehung um die Übertragungsachse bzw. Rotation um die Übertragungsachse in formschlüssigen Eingriff mit einer dafür vorgesehenen Hinterschneidung am ersten Anschlussabschnitt gelangt. Weiterhin bevorzugt kann es sein, den Bremszylinder nach Einstellen dieser Rotationsposition mittels zusätzlicher Befestigungselemente oder eines zusätzlichen Befestigungselements festzulegen. Vorteilhaft ist diese Ausführungsform insbesondere dadurch, dass eine schnelle und einfache Montage mit nur wenigen Montageschritten ermöglicht wird.

Weitere Vorteile und Merkmale der vorliegenden Erfindung ergeben sich aus der nachfolgenden Beschreibung einer bevorzugten Ausführungsform des erfindungsgemäßen Bremssystems mit Bezug auf die beigefügten Figuren. Einzelne Merkmale der gezeigten Ausführungsformen können dabei im Rahmen der Erfindung miteinander kombiniert werden. Es zeigen:
- Fig. 1: eine Ansicht des erfindungsgemäßen Bremssystems, und
- Fig. 2: eine teilweise geschnittene Ansicht einer bevorzugten Ausführungsform des erfindungsgemäßen Bremssystems.

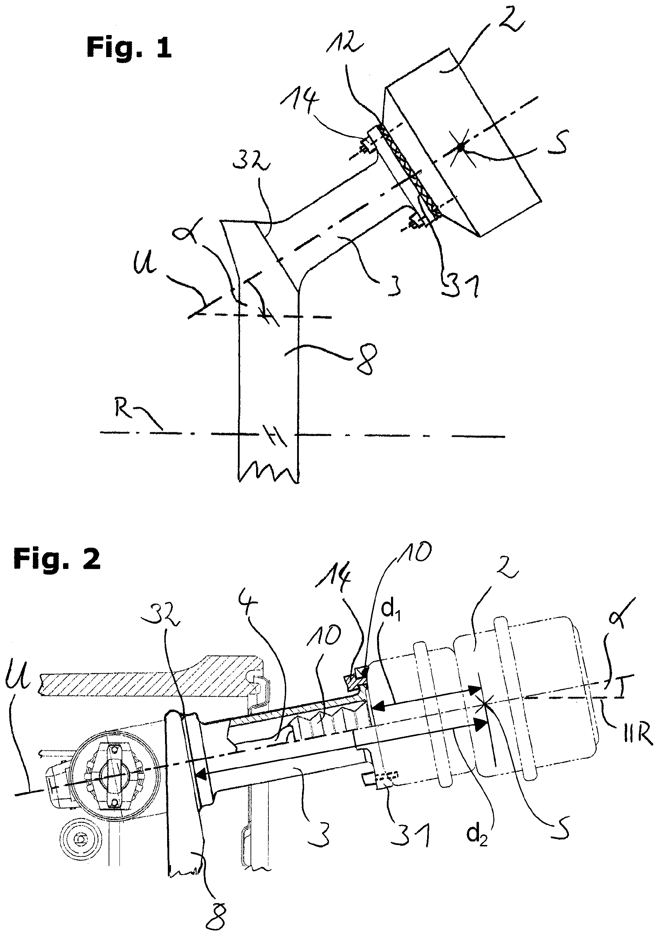

Fig. 1 zeigt eine bevorzugte Ausführungsform des erfindungsgemäßen Bremssystems umfassend eine Trägereinheit 8, einen Bremszylinder 2 und ein Anschlusselement 3. Das Anschlusselement 3 ist bevorzugt einstückig mit der Trägereinheit 8 ausgeführt, wobei es in einem zweiten Anschlussabschnitt 32 an der Trägereinheit 8 festgelegt ist. Weiterhin weist das Anschlusselement 3 einen Anschlussabschnitt 31 auf, welcher besonders bevorzugt als Flansch ausgeführt ist und der Aufnahme bzw. Festlegung des Bremszylinders 2 dient. Die Trägereinheit 8 entspricht dabei bevorzugt dem Bremsträger eines bekannten Bremssystems und erstreckt sich im Wesentlichen quer zu einer Radachse R. Das Anschlusselement 3 erstreckt sich im Wesentlichen entlang einer Übertragungsachse U, welche um einen Winkel α zur Radachse geneigt ist. Der erste Anschlussabschnitt 31 des Anschlusselements 3 ist bevorzugt als Flansch ausgebildet, wobei Befestigungsmittel 14 am ersten Anschlussabschnitt 31 eingreifen können, um den Bremszylinder 2 an dem Anschlusselement 3 festzulegen. Nicht gezeigt ist, dass das Anschlusselement 3 bevorzugt hohlkörperförmig ausgelegt ist, wobei in einer länglichen Aussparung des Anschlusselements 3 ein Übertragungselement 4 aufgenommen ist. Zwischen dem ersten Anschlussabschnitt 31 und dem Bremszylinder 2 ist ein Dämpferelement 12 angeordnet, wobei das Dämpferelement 12 auch gleichzeitig als Dichtelement fungieren kann. Weiterhin ist der Schwerpunkt S des Bremszylinders 2 dargestellt, wobei dieser Schwerpunkt S bevorzugt auf der Übertragungsachse U liegt.

Fig. 2 zeigt eine teilweise geschnittene Ansicht einer bevorzugten Ausführungsform des erfindungsgemäßen Bremssystems. Dabei ist insbesondere das Anschlusselement 3 in teilweise geschnittener Darstellung gezeigt. Erkennbar ist dabei ein Übertragungselement 4 und ein Dichtelement 10, das als Faltenbalg ausgeführt ist. Ein zweites Dichtelement 10 ist exemplarisch als O-Ring ausgeführt, welcher zwischen den Kontaktflächen der Bremszylinders 2 und des ersten Anschlussabschnitts 31 angeordnet ist. Das Anschlusselement 3 ist im zweiten Anschlussbereich 32 bevorzugt stoffschlüssig an der Trägereinheit 8 festgelegt, wobei der Bereich, in welchem die Festlegung stattfindet, eine bevorzugt antiklastisch gerundete Außenfläche aufweist. Der Bremszylinder 2 überträgt bevorzugt eine Kraft entlang einer Übertragungsachse U auf das Übertragungselement 4, welches sich entlang der Übertragungsachse U verlagert und die Kraft an die in der Figur links an der Trägereinheit vorgesehene Wandlereinheit überträgt, um in der Wandlereinheit eine Bewegung zweier Kolben quer zur Übertragungsachse U zu erreichen. Dabei ist die Übertragungsachse U bevorzugt mit einem Winkel α zur Radachse R geneigt. In der Figur ist dies dargestellt durch eine hilfsweise eingetragene gestrichelte Gerade, welche parallel zur Radachse R verläuft. Der flanschartig ausgebildete erste Anschlussabschnitt 31 des Anschlusselements 3 ist insbesondere bevorzugt dazu geeignet, Befestigungsmittel 14 aufzunehmen, welche ihrerseits wiederum am Bremszylinder 2 eingreifen können, um diesen an dem Anschlusselement 3 festzulegen. Bevorzugt ist es insbesondere, dass die Befestigungsmittel 14 Schrauben bzw. bolzenförmige Elemente sind, welche mit ihrem Außengewinde bevorzugt in ein am Bremszylinder 2 vorgesehenes Innengewinde eingreifen und auf diese Weise den Bremszylinder 2 am Anschlusselement 3 festlegen. Weiterhin gezeigt ist der Abstand d₁ des ersten Anschlussabschnitts 31 zum Schwerpunkt des Bremszylinders, bemessen entlang der Übertragungsachse U, und der Abstand d₂ des zweiten Anschlussabschnitts zum Schwerpunkt S des Bremszylinders. Das Verhältnis der beiden Abstände d₁ und d₂ ist dabei ein Ausdruck für das Verhältnis der jeweils an dem ersten und dem zweiten Anschlussabschnitt 31, 32 angreifenden Hebelarme einer Kraft, beispielsweise der Gewichtskraft des Bremszylinders 2, welche im Schwerpunkt S wirkt. In der linken Hälfte der Figur ist eine Bremstrommel angedeutet, welche bevorzugt rotierend um die Trägereinheit 8 angeordnet ist, wobei das Anschlusselement 3 es ermöglicht, den Bremszylinder 2 außerhalb des Bereiches der Bremstrommel anzuordnen bzw. festzulegen. Die links von der Trägereinheit 8 angeordnete Wandlereinheit ist bevorzugt eine Spreizkeileinheit einer Spreizkeiltrommelbremse, welche dazu dient, zwei Bremsbackenelemente, welche innerhalb der Bremstrommel angeordnet sind, relativ zueinander zu verlagern, so dass ein Bremsvorgang einsetzt und Reibung zwischen den Bremsbackenelementen und der Innenseite der Bremstrommel stattfindet. Die Wandlereinheit kann in einer alternativ bevorzugten Ausführungsform auch durch eine Aussparung an der Trägereinheit 8 hindurchreichen und einstückig mit dem Anschlusselement 3 ausgeführt sein, wobei der Verbund aus Wandlereinheit und Anschlusselement 3 mittels einer stoffschlüssigen Verbindung an der Trägereinheit 8 festlegbar ist.

### Bezugszeichenliste:

- 2: - Bremszylinder
- 3: - Anschlusselement
- 4: - Übertragungselement
- 8: - Trägereinheit
- 10: - Dichtelement
- 12: - Dämpferelement
- 14: - Befestigungselement
- 31: - erster Anschlussabschnitt
- 32: - zweiter Anschlussabschnitt
- d₁: - Abstand
- d₂: - Abstand
- R: - Radachse
- S: - Schwerpunkt
- U: - Übertragungsachse
- α: - Winkel

## Patentansprüche

1. Bremssystem einer Trommelbremse,
umfassend eine Trägereinheit (8) und einen Bremszylinder (2),
wobei ein Anschlusselement (3) vorgesehen ist, das einen ersten Anschlussabschnitt (31) zur Festlegung des Bremszylinders (2) aufweist und in einem zweiten Anschlussabschnitt (32) an der Trägereinheit (8) festgelegt ist, wobei der erste Anschlussabschnitt (31) parallel zu einer Radachse (R) versetzt zum zweiten Anschlussabschnitt (32) angeordnet ist,
wobei der erste Anschlussabschnitt (31) unmittelbar am Bremszylinder (2) festlegbar ist, um den Abstand zwischen dem Schwerpunkt (S) des Bremszylinders (2) und dem ersten Anschlussabschnitt (31) gering zu halten, **dadurch gekennzeichnet, dass**
der Abstand des Schwerpunkts (S) des Bremszylinders (2) zum ersten Anschlussabschnitt (31) in einem Verhältnis von 0,3 bis 0,7 zum Abstand des Schwerpunkts (S) des Bremszylinders (2) vom zweiten Anschlussabschnitt (32) steht,
wobei das Anschlusselement (3) zumindest bereichsweise hohlkörperförmig ausgebildet ist, um ein Übertragungselement (4) aufzunehmen,
und wobei die Aussparung des Anschlusselements (3) sich im Wesentlichen längs einer Übertragungsachse (U) erstreckt,
wobei die Übertragungsachse (U) zur Radachse (R) um einen Winkel (α) geneigt ist, und
wobei der Winkel (α) Werte im Bereich von 7° bis 15° annimmt,
wobei der zweite Anschlussabschnitt (32) eine antiklastisch gekrümmte Außenkontur aufweist.

2. Bremssystem nach Anspruch 1,
wobei das Anschlusselement (3) einstückig mit der Trägereinheit (8) ausgebildet ist.

3. Bremssystem nach einem der vorhergehenden Ansprüche,
wobei zumindest ein Dichtelement (10) vorgesehen ist,
um den Verbindungsbereich zwischen Bremszylinder (2) und Anschlusselement (3) und/oder die Aussparung des Anschlusselements (3) und/oder den Bremszylinder (2) gegen das Eindringen von Fremdkörpern zu schützen.

4. Bremssystem nach einem der vorhergehenden Ansprüche,
wobei zwischen dem ersten Anschlussabschnitt (31) und dem Bremszylinder (2) ein Dämpferelement (12) vorgesehen ist,
um die Übertragung von Stößen und Schwingungen vom Anschlusselement (3) auf den Bremszylinder (2) und entgegengesetzt zu vermindern.

5. Bremssystem nach einem der vorhergehenden Ansprüche,
wobei der erste Anschlussabschnitt (31) als Flansch ausgebildet ist und Aussparungen aufweist,
in welchen Befestigungsmittel in Eingriff bringbar sind, um den Bremszylinder (2) am Anschlusselement (3) festzulegen.

6. Bremssystem nach einem der Ansprüche 1 bis 5,
wobei das Anschlusselement (3) eine entlang der Übertragungsachse (U) in Richtung des zweiten Anschlussabschnitts (32) zunehmende Querschnittsdicke und/oder Wandstärke aufweist, um eine gleichmäßige Biegespanungsverteilung im Anschlusselement (3) zu erreichen.

7. Bremssystem nach einem der vorhergehenden Ansprüche,
wobei der erste Anschlussabschnitt (31) eine Hinterschneidung aufweist, mit welcher eine korrespondierende Geometrie des Bremszylinders (2) in formschlüssigen Eingriff bringbar ist.

## Claims

1. Brake system of a drum brake,
comprising a carrier unit (8) and a brake cylinder (2),
wherein a connecting element (3) is provided, which has a first connection section (31) for fixing the brake cylinder (2) and is fixed in a second connection section (32) to the carrier unit (8),
wherein the first connection section (31) is arranged offset to the second connection section (32) while being parallel relative to a wheel axis (R),
wherein the first connection section (31) can be fixed directly to the brake cylinder (2) in order to keep the distance between the center of gravity (S) of the brake cylinder (2) and the first connection section (31) low,
**characterized in that**
the distance of the center of gravity (S) of the brake cylinder (2) to the first connection section (31) is in a relationship 0.3 to 0.7 to the distance of the center of gravity (S) of the brake cylinder (2) to the second connection section (32)
wherein the connecting element (3) is formed as a hollow body at least over a certain area so as to accommodate or receive a transmission element (4),
and wherein the cavity of the connecting element (3) extends essentially along a transmission axis (U)
wherein the transmission axis (U) is inclined at an angle (α) relative to the wheel axis (R), and
wherein the angle (α) takes values in a range of 7° to 15°
wherein the second connection section (32) has an anticlastically curved outer contour.

2. Brake system according to claim 1,
wherein the connecting element (3) is formed as an integral part of the carrier unit (8).

3. Brake system according to any one of the preceding claims,
wherein there is provided at least one sealing element (10) in order to protect the connection area between the brake cylinder (2) and the connecting element (3) and/or the cavity of the connecting element (3) and/or the brake cylinder (2) against the entry of foreign matter.

4. Brake system according to any one of the preceding claims,
wherein between the first connection section (31) and the brake cylinder (2) there is provided a damping element (12) in order to reduce the transmission of shocks and vibrations from the connecting element (3) to the brake cylinder (2) and vice versa.

5. Brake system according to any one of the preceding claims,
wherein the first connection section (31) is formed as a flange and comprises cavities, which may be engaged by fastening means so as to fix the brake cylinder (2) to the connecting element (3).

6. Brake system according to any one of claims 1 to 5,
wherein the cross-sectional thickness and/or wall thickness of the connecting element (3) increase(s) along the transmission axis (U) in the direction of the second connection section (32) in order to achieve an even distribution of the bending load in the connecting element (3).

7. Brake system according any one of the preceding claims,
wherein the first connection section (31) has an undercut, which may be made to positively or form-fittingly engage a corresponding geometry of the brake cylinder (2).

## Revendications

1. Système de freinage d'un frein à tambour, incluant une unité porteuse (8) et un cylindre de frein (2),
dans lequel il est prévu un élément de raccordement (3) qui comprend une première portion de raccordement (31) pour la fixation du cylindre de frein (2) et qui est fixé sur l'unité porteuse (8) dans une seconde portion de raccordement (32),
dans lequel la première portion de raccordement (31) est agencée en décalage par rapport à la seconde portion de raccordement (32) parallèlement à un axe de roue (R),
dans lequel la première portion de raccordement (31) est susceptible d'être fixée directement sur le cylindre de frein (2) afin de maintenir faible la distance entre le centre de gravité (S) du cylindre de frein (2) et la première portion de raccordement (31),
**caractérisé en ce que**
la distance du centre de gravité (S) du cylindre de frein (2) à la première portion de raccordement (31) est dans un rapport de 0,3 à 0,7 vis-à-vis de la distance du centre de gravité (S) du cylindre de frein (2) à la seconde portion de raccordement (32),
l'élément de raccordement (3) est réalisé au moins localement sous la forme d'un corps creux afin de recevoir un élément de transmission (4), et
l'évidement de l'élément de raccordement (3) s'étend sensiblement le long d'un axe de transmission (U),
l'axe de transmission (U) est incliné d'un angle (α) par rapport à l'axe de roue (R), et
l'angle (α) prend des valeurs dans la plage de 7° à 15°,
la seconde portion de raccordement (32) présente un contour extérieur avec une courbure anticlastique.

2. Système de freinage selon la revendication 1,
dans lequel l'élément de raccordement (3) est réalisé d'une seule pièce avec l'unité porteuse (8).

3. Système de freinage selon l'une des revendications précédentes,
dans lequel il est prévu au moins un élément d'étanchéité (10) afin de protéger la zone de liaison entre le cylindre de frein (2) et l'élément de raccordement (3) et/ou l'évidement de l'élément de raccordement (3) et/ou le cylindre de frein (2) à l'encontre de la pénétration de corps étrangers.

4. Système de freinage selon l'une des revendications précédentes,
dans lequel il est prévu un élément amortisseur (12) entre la première portion de raccordement (31) et le cylindre de frein (2), afin de réduire la transmission d'à-coups et de vibrations depuis l'élément de raccordement (3) vers le cylindre de frein (2) et en sens opposé.

5. Système de freinage selon l'une des revendications précédentes,
dans lequel la première portion de raccordement (31) est réalisée sous forme de bride et comporte des évidements dans lesquels des moyens de fixation peuvent être amenés en engagement afin de fixer le cylindre de frein (2) sur l'élément de raccordement (3).

6. Système de freinage selon l'une des revendications 1 à 5,
dans lequel l'élément de raccordement (3) présente une épaisseur de section transversale et/ou une épaisseur de paroi qui augmente le long de l'axe de transmission (U) en direction de la seconde portion de raccordement (32), pour atteindre une répartition régulière des contraintes de flexion dans l'élément de raccordement (3).

7. Système de freinage selon l'une des revendications précédentes,
dans lequel la première portion de raccordement (31) comporte une contre-dépouille avec laquelle une géométrie correspondante du cylindre de frein (2) peut être amenée en engagement par coopération de formes.
